(19) **Europäisches Patentamt**
**European Patent Office**
**Office européen des brevets**

(11) **EP 2 704 235 B1**

(12) **EUROPEAN PATENT SPECIFICATION**

(45) Date of publication and mention
of the grant of the patent:
**23.12.2015 Bulletin 2015/52**

(51) Int Cl.:
*H01M 4/36* *(2006.01)*     *H01M 4/587* *(2010.01)*
*H01M 10/0525* *(2010.01)*     *H01M 10/054* *(2010.01)*
*H01M 4/02* *(2006.01)*

(21) Application number: **13181704.1**

(22) Date of filing: **26.08.2013**

(54) **Negative-electrode material, negative-electrode active material, negative electrode, and alkali metal ion battery**

Negativelektrodenmaterial, Negativelektroden-Aktivmaterial, negative Elektrode und Alkali-Metall-Ionenbatterie

Matériau d'électrode négative, matériau actif d'électrode négative, électrode négative et batterie à ions de métal alcalin

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2012 JP 2012188326**
**07.12.2012 JP 2012268643**
**07.12.2012 JP 2012268645**
**06.02.2013 JP 2013021643**

(43) Date of publication of application:
**05.03.2014 Bulletin 2014/10**

(73) Proprietor: **Sumitomo Bakelite Company Limited**
**Shinagawa-ku**
**Tokyo 140-0002 (JP)**

(72) Inventors:
• **Ono, Yukiharu**
**Tokyo, Tokyo 140-0002 (JP)**

• **Takeuchi, Takeshi**
**Tokyo, Tokyo 140-0002 (JP)**
• **Watanabe, Tsuyoshi**
**Tokyo, Tokyo 140-0002 (JP)**

(74) Representative: **Schollweck, Susanne**
**ZSP Patentanwälte**
**Partnerschaftsgesellschaft**
**Radlkoferstrasse 2**
**81373 München (DE)**

(56) References cited:
**EP-A1- 0 646 978**     **JP-A- 2000 200 603**
**JP-A- 2012 114 024**     **US-A1- 2009 220 863**
**US-A1- 2009 297 953**     **US-A1- 2012 021 294**
**US-B1- 6 482 547**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application is based on Japanese Patent Application No. 2012-188326 filed on August 29, 2012, Japanese Patent Application No. 2012-268643 filed on December 7, 2012, Japanese Patent Application No. 2012-268645 filed on December 7, 2012, and Japanese Patent Application No. 2013-021643 filed on February 6, 2013.

## BACKGROUND

### TECHNICAL FIELD

The present invention relates to a negative-electrode material, a negative-electrode active material, a negative electrode, and an alkali metal ion battery.

### RELATED ART

In general, a graphite material is used as a negative-electrode material for an alkali metal ion battery. However, since the layer spacing of crystallites in the graphite material increases or decreases depending on doping or undoping of alkali metal ions of lithium or the like, a strain is likely to be generated in the crystallites. Accordingly, since a crystal structure of the graphite material is likely to be broken due to repetition of charging and discharging, it is thought that an alkali metal ion battery using the graphite material as a negative-electrode material is poor in charging and discharging cycle characteristics.

Japanese Unexamined Patent Publication No. 8-115723 discloses a carbonaceous material for an electrode of a secondary battery in which the average layer spacing of face (002) measured using an X-ray diffraction method is equal to or more than 0.365 nm and a ratio ($\rho_H/\rho_B$) of a density ($\rho_H$) measured using helium gas as a replacement medium to a density ($\rho_B$) measured using butanol as a replacement medium is equal to or more than 1.15.

Since the carbonaceous material has a layer spacing of crystallites larger than that of the graphite material and has destruction of a crystal structure occurring less due to repetition of charging and discharging than the graphite material, it is thought that the charging and discharging cycle characteristics thereof is excellent (see Japanese Unexamined Patent Publication No. 8-115723 and Pamphlet of International Publication No. WO2007/040007)

JP 2012 114024 A refers to a carbon material for lithium ion secondary battery. US 6 482 547 B1, US2009/220863 A1, JP 2000 200603A and EP 0646978A1 constitute also related prior-art.

## SUMMARY

As disclosed in Japanese Unexamined Patent Publication No. 8-115723, the carbonaceous material having a layer spacing of crystallites larger than that of the graphite material is more likely to be oxidized in the atmospheric air than the graphite material and thus the storage characteristic thereof is poor. Accordingly, it is necessary to store the carbonaceous material in an inert gas atmosphere or the like just after being manufactured and it is thus more difficult to treat the carbonaceous material than the graphite material.

In a negative-electrode material having $d_{002}$ larger than that of the graphite material, since fine pores are more likely to grow than the graphite material, moisture is likely to be adsorbed in the pores. When moisture is adsorbed, an irreversible reaction occurs between lithium with which the negative-electrode material is doped and moisture and an increase in irreversible capacity at the time of initial charging or a degradation in charging and discharging cycle characteristics is caused as a result. For this reason, it is thought that the negative-electrode material having large $d_{002}$ is poorer in storage characteristic than the graphite material (for example, see Pamphlet of International Publication No. WO2007/040007). Accordingly, in the related art, it has been tried to improve the storage characteristic by closing pores of the negative-electrode material to reduce the equilibrium moisture adsorption (for example, see Pamphlet of International Publication No. WO2007/040007).

However, the inventors of the present invention tested regeneration of the negative-electrode material by heating and drying the degraded negative-electrode material to remove moisture adsorbed in the fine pores, but could not completely regenerate the negative-electrode material. As disclosed in Pamphlet of International Publication No. WO2007/040007, when the pores of the negative-electrode material are closed, there is a problem in that the charging and discharging capacity is lowered.

Therefore, an object of the present invention is to provide a negative-electrode material for an alkali metal ion battery which has an average layer spacing of face (002) larger than that of a graphite material and which has excellent storage characteristic and charging and discharging capacity.

The inventors of the present invention have intensively studied to realize a negative-electrode material for an alkali metal ion battery which has an average layer spacing of face (002) larger than that of a graphite material and which has excellent storage characteristic and charging and discharging capacity. Consequentially, the inventors found that a negative-electrode material including a first region and a second region having different reflectance ratios in a cross-section thereof is excellent in storage characteristic and charging and discharging characteristic and have made the present invention.

In the invention, as defined in claim 1, there is provided a carbonaceous negative-electrode material of which an average layer spacing $d_{002}$ of face (002) calculated by an X-ray diffraction method using CuK$\alpha$ radiation as a radiation source is equal to or more than 0,365 nm and that is used in an alkali metal ion battery, wherein when the negative-electrode material is embedded in an epoxy resin, the epoxy resin is cured, the resultant cured material is cut and polished to expose a cross-section of the negative-electrode material, and the cross-section is observed in a bright field with 1000 times magnification using an optical microscope, the cross-section of the negative-electrode material includes a first region and a second region having different reflectance ratios.

In one embodiment, there is provided a negative-electrode active material including the negative-electrode material.

In still another embodiment, there is provided a negative electrode for an alkali metal ion battery, wherein a negative-electrode active material layer including the negative-electrode active material and a negative-electrode collector are stacked in this order.

In still another embodiment, there is provided an alkali metal ion battery including at least the negative electrode for an alkali metal ion battery, an electrolyte, and a positive electrode.

According to the embodiments of the present invention, it is possible to provide a negative-electrode material for an alkali metal ion battery which has an average layer spacing of face (002) larger than that of a graphite material and which has excellent storage characteristic and charging and discharging capacity.

BRIEF DESCRIPTION OF THE DRAWINGS

The above and other objects, advantages and features of the present invention will be more apparent from the following description of certain preferred embodiments taken in conjunction with the accompanying drawings, in which:

Figs. 1A to 1C are schematic diagrams illustrating examples of a cross-sectional structure of a negative-electrode material according to an embodiment of the present invention.
Fig. 2 is a schematic diagram illustrating an example of a lithium ion battery according to an embodiment of the present invention.
Fig. 3 is a diagram illustrating an optical-microscope photograph of a cross-section of a negative-electrode material obtained in Example 1.
Fig. 4 is a diagram illustrating an optical-microscope photograph of a cross-section of a negative-electrode material obtained in Example 5.
Fig. 5 is a diagram illustrating an optical-microscope photograph of a cross-section of a negative-electrode material obtained in Comparative Example 1.

DETAILED DESCRIPTION

The present invention will be now described herein with reference to illustrative embodiments. Those skilled in the art will recognize that many alternative embodiments can be accomplished using the teachings of the present invention and that the present invention is not limited to the embodiments illustrated for explanatory purposes.

Hereinafter, embodiments of the present invention will be described with reference to the accompanying drawings. The drawings are schematic diagrams and do not agree to actual size ratios.

<Negative-electrode Material>

A negative-electrode material according to the invention is a carbonaceous negative-electrode material used in an alkali metal ion battery such as a lithium ion battery or a sodium ion battery and an average layer spacing $d_{002}$ of face (002) (hereinafter, referred to as "$d_{002}$") thereof calculated by an X-ray diffraction method using CuK$\alpha$ radiation as a radiation source is equal to or more than 0.365 nm. When $d_{002}$ is equal to or more than the lower limit, destruction of a crystal structure less occurring due to repetition of doping and undoping of alkali metal ions of lithium or the like is suppressed and it is thus possible to improve the charging and discharging characteristic of the negative-electrode material.

The upper limit of the average layer spacing $d_{002}$ is not particularly limited, but is typically equal to or less than 0.400 nm, preferably equal to or less than 0.395 nm, and more preferably equal to or less than 0.390 nm. When $d_{002}$ is equal to or less than the upper limit, it is possible to suppress irreversible capacity of the negative-electrode material.

A carbonaceous material having such an average layer spacing $d_{002}$ is generally called hardly graphitizable carbon.

When the negative-electrode material according to the invention is embedded in an epoxy resin, the epoxy resin is cured, the resultant cured material is cut and polished to expose a cross-section of the negative-electrode material, and the cross-section is observed in a bright field with 1000 times magnification using an optical microscope, a first region and a second region having different reflectance ratios are observed in the cross-section of the negative-electrode material includes.

In this way, the negative-electrode material according to the invention in which the first region and the second region having different reflectance ratios are observed is excellent in storage characteristic and charging and discharging capacity.

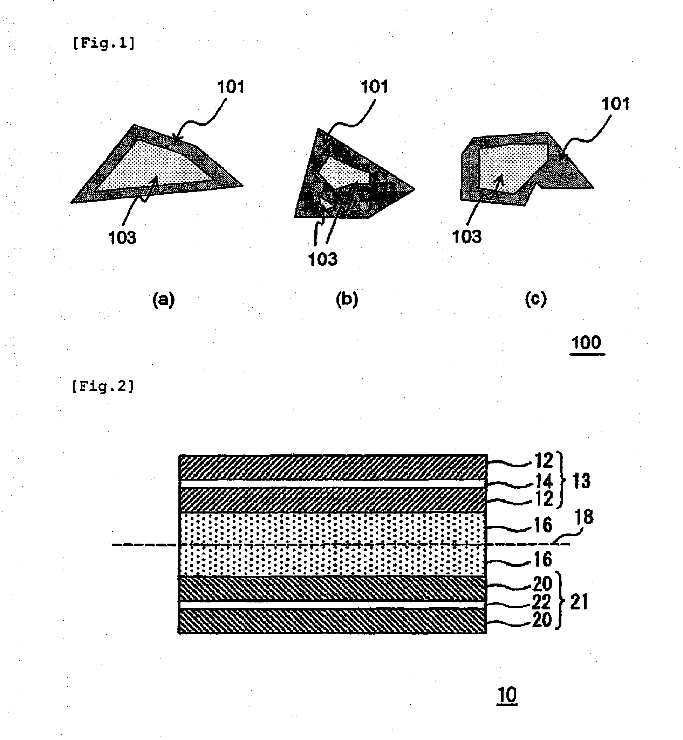

The first region and the second region having different reflectance ratios will be described below in more detail with reference to Figs. 1A to 1C.

Figs. 1A to 1C are schematic diagrams illustrating examples of a cross-sectional structure of a negative-electrode material 100 according to an embodiment of the present invention.

In the negative-electrode material 100 according to this embodiment, as shown in Figs. 1A to 1C, for example, a first region 101 and a second region 103 have constant reflectance ratios, respectively, and the reflectance ratio discontinuously varies at the interface between the first region 101 and the second region 103.

In the negative-electrode material 100 according to this embodiment, as shown in Figs. 1A to 1C, for example, the first region 101 exists along the outer edge of the cross-section of the negative-electrode material 100 and the second region 103 exists inside the first region 101.

In the negative-electrode material 100 according to this embodiment, for example, the reflectance ratio (B) of the second region 103 is larger than the reflectance ratio (A) of the first region 101. That is, when observed using an optical microscope, the second region 103 is observed to be whiter (brighter) than the first region 101.

Although not clear, it is thought that the reason why the negative-electrode material 100 according to this embodiment from which the first region and the second region having different reflectance ratios are observed has $d_{002}$ equal to or more than 0,365 nm but has excellent storage characteristic and charging and discharging capacity is that a region contributing an increase in capacity and a region contributing to improvement of the storage characteristic are formed in appropriate forms.

The negative-electrode material according to this embodiment is used as a negative-electrode material of an alkali metal ion battery such as a lithium ion battery or a sodium ion battery. Particularly, the negative-electrode material according to this embodiment is suitably used as a negative-electrode material of a lithium ion battery.

(Moisture Content Measured Using Karl Fischer's Coulometric Titration Method)

In the negative-electrode material according to this embodiment, when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and then maintaining the preliminarily-dried negative-electrode material at 200°C for 30 minutes is measured using a Karl Fischer's coulometric titration method, the moisture content generated from the preliminarily-dried negative-electrode material is preferably equal to or less than 0.20 wt% with respect to 100 wt% of the preliminarily-dried negative-electrode material, more preferably equal to or less than 0.15 wt%, and still more preferably equal to or less than 0.10 wt%.

By setting the moisture content to be equal to or less than the upper limit, it is possible to further suppress degradation of the negative-electrode material even when the negative-electrode material according to this embodiment is stored in the atmospheric air for a long time. The moisture content means an indicator of an amount of chemisorbed water to be desorbed by maintaining the negative-electrode material at 200°C for 30 minutes.

The lower limit of the moisture content is not particularly limited, but is generally equal to or more than 0.01 wt%.

When the moisture content measured using the Karl Fischer's coulometric titration method is equal to or less than the upper limit, it is thought that the reason for further suppressing the degradation of the negative-electrode material is that the less moisture content the negative material has, the more difficult it is to cause adsorption of moisture, although not apparent.

From the study of the inventors of the present invention, it is clear that moisture to be adsorbed in the negative-electrode material is roughly classified into physisorbed water and chemisorbed water and the smaller amount of chemisorbed water the negative material has, the more excellent the storage characteristic and the charging and discharging capacity are. That is, the inventors found that the scale of the amount of chemisorbed water is effective as a design guideline for realizing the negative-electrode material having excellent storage characteristic and charging and discharging capacity.

Here, the physisorbed water means adsorbed water which is physically present as water molecules on the surface of the negative-electrode material. On the other hand, the chemisorbed water means adsorbed water which is coordinated with or chemically bonded to a first layer of the surface of the negative-electrode material.

It is thought that the surface of a negative-electrode material having a small amount of chemisorbed water has a structure which is difficult to coordinate or chemically bond with or to moisture or a structure which is difficult to change to such a structure even when the negative-electrode material is maintained in the atmospheric air. Therefore, by setting the moisture content to be equal to or less than the upper limit, it is thought that it is difficult to cause adsorption of moisture or to change the surface structure even when the negative-electrode material is stored in the atmospheric air for a long time, thereby improving the storage characteristic.

In this embodiment, moisture desorbed from the negative-electrode material in the preliminary drying in which the negative-electrode material is maintained under the conditions of a temperature of 130°C and a nitrogen atmosphere for 1 hour is called physisorbed water, and moisture desorbed from the negative-electrode material in the process in which the preliminarily-dried negative-electrode material is maintained at 200°C for 30 minutes is called chemisorbed water.

(Crystallite Size)

In the negative-electrode material according to this embodiment, the crystallite size in the c-axis direction (hereinafter, also abbreviated as "$Lc_{(002)}$") calculated using an X-ray diffraction method is preferably equal to or less than 5 nm, more preferably equal to or less than 3 nm, and still more preferably equal to or less than 2 nm.

(Average Particle Diameter)

In the negative-electrode material according to this embodiment, the particle diameter ($D_{50}$, average particle diameter) at the time of 50% accumulation in a volume-based cumulative distribution is preferably equal to or more than 1 $\mu$m and equal to or less than 50 $\mu$m and more preferably equal to or more than 2 $\mu$m and equal to or less than 30 $\mu$m. Accordingly, it is possible to produce a high-density negative electrode.

(Specific Surface Area)

In the negative-electrode material according to this embodiment, the specific surface area measured using a three-point BET method in nitrogen adsorption is preferably equal to or more than 1 $m^2$/g and equal to or less than 15 $m^2$/g and more preferably equal to or more than 3 $m^2$/g and equal to or less than 8 $m^2$/g.

By setting the specific surface area measured using the three-point BET method in nitrogen adsorption to be equal to or less than the upper limit, it is possible to further suppress irreversible reaction of the negative-electrode material and the electrolyte.

By setting the specific surface area measured using the three-point BET method in nitrogen adsorption to be equal to or more than the lower limit, it is possible to obtain appropriate permeability of the electrolyte into the negative-electrode material.

The method of calculating the specific surface area is as follows.

A monomolecular layer adsorption amount Wm is calculated using Expression (1), the total surface area $S_{total}$ is calculated using Expression (2), and the specific surface area S is calculated using Expression (3).

$$1/[W \cdot \{(P_o/P)-1\}] = ((C-1)/(W_m \cdot C))(P/P_o)(1/(W_m \cdot C)) \quad \dots (1)$$

In Expression (1), P represents a pressure of adsorbate gas in adsorption equilibrium, Po represents a saturated vapor pressure of the adsorbate at an adsorption temperature, W represents an absorbed amount under an adsorption equilibrium pressure P, $W_m$ represents a monomolecular layer adsorbed amount, and C represents a constant ($C=\exp\{(E_1-E_2)RT\}$) [where $E_1$ represents the adsorption heat (kJ/mol) of a first layer and $E_2$ represents the liquefaction heat (kJ/mol) at the measurement temperature of the adsorbate]) related to the magnitude of an interaction between the solid surface and the adsorbate.

$$S_{total} = (W_m N A_{cs}) M \quad \dots (2)$$

In Expression (2), N represents the Avogadro number, M represents the molecular weight, and $A_{cs}$ represents the adsorption cross-sectional area.

$$S = S_{total}/w \qquad \ldots (3)$$

In Expression (3), w represents the weight of a sample (g).

(Amount of Carbon Dioxide Gas Adsorbed)

In the negative-electrode material according to this embodiment, the amount of carbon dioxide gas adsorbed is preferably less than 10 ml/g, more preferably equal to or less than 8 ml/g, and still more preferably equal to or less than 6 ml/g. When the amount of carbon dioxide gas adsorbed is equal to or less than the upper limit, it is possible to further improve the storage characteristic of the negative-electrode material.

In the negative-electrode material according to this embodiment, the amount of carbon dioxide gas adsorbed is preferably equal to or more than 0.05 ml/g and more preferably equal to or more 0.1 ml/g. When the amount of carbon dioxide gas adsorbed is equal to or more than the lower limit, it is possible to further improve the charging capacity of lithium.

The amount of carbon dioxide gas adsorbed can be measured using a material obtained by vacuum-drying the negative-electrode material at 130°C for 3 hours or more using a vacuum dryer as a measurement sample and using ASAP-2000M made by Micromeritics Instrument Corporation.

$(\rho^H/\rho^B)$

In the negative-electrode material according to this embodiment, the ratio ($\rho^H/\rho^B$) of the density ($\rho^H$) measured using helium gas as a replacement medium to the density ($\rho^B$) measured using butanol as a replacement medium is preferably more than 1.05, more preferably equal to or more than 1.07, and still more preferably equal to or more than 1.09.

The ratio $\rho^H/\rho^B$ is preferably less than 1.25, more preferably less than 1.20, and still more preferably less than 1.15.

When the ratio $\rho^H/\rho^B$ is equal to or more than the lower limit, it is possible to further improve the charging capacity of lithium. When the ratio $\rho^H/\rho^B$ is equal to or less than the upper limit, it is possible to further reduce the irreversible capacity of lithium.

The value of $\rho^H/\rho^B$ is an indicator of a pore structure of the negative-electrode material and means that the larger the value is, the more the number of pores which butanol cannot enter but helium can enter is. That is, the larger value of $\rho^H/\rho^B$ means that the more fine pores are present. When the number of pores which helium cannot enter is large, the value of $\rho^H/\rho^B$ decreases.

In the negative-electrode material according to this embodiment, the value of $\rho^B$ is preferably equal to or more than 1.50 g/cm$^3$ and equal to or less than 1.80 g/cm$^3$, is more preferably equal to or more than 1.55 g/cm$^3$ and equal to or less than 1.78 g/cm$^3$, and still more preferably equal to or more than 1.60 g/cm$^3$ and equal to or less than 1.75 g/cm$^3$, from the viewpoint of control of the pore size.

In the negative-electrode material according to this embodiment, the value of $\rho^H$ is preferably equal to or more than 1.80 g/cm$^3$ and equal to or less than 2.10 g/cm$^3$, is more preferably equal to or more than 1.85 g/cm$^3$ and equal to or less than 2.05 g/cm$^3$, and still more preferably equal to or more than 1.88 g/cm$^3$ and equal to or less than 2.00 g/cm$^3$, from the viewpoint of control of the pore size.

(Pore Volume)

In the negative-electrode material according to this embodiment, the pore volume in which the pore diameter measured using a mercury intrusion method ranges from 0.003 $\mu$m to 5 $\mu$m is preferably less than 0.55 ml/g, more preferably equal to or less than 0.53 ml/g, and still more preferably equal to or less than 0.50 ml/g, from the viewpoint of improvement of a charging density.

In the negative-electrode material according to this embodiment, the pore volume in which the pore diameter measured using a mercury intrusion method ranges from 0.003 $\mu$m to 5 $\mu$m is preferably equal to or more than 0.10 ml/g, more preferably equal to or more than 0.20 ml/g, and still more preferably equal to or more than 0.30 ml/g, from the viewpoint of reduction of irreversible capacity.

Here, the pore volume based on the mercury intrusion method can be measured using AUTOPORE III 9420 made by Micromeritics Instrument Corporation.

(Discharging Capacity)

In the negative-electrode material according to this embodiment, the discharging capacity when a half cell produced under the conditions to be described later has been subjected to charging and discharging under charging and discharging conditions to be described later is preferably equal to or more than 360 mAh/g, more preferably equal to or more than 380 mAh/g, still more preferably equal to or more than 400 mAh/g, and still more preferably equal to or more than 420 mAh/g. The upper limit of the discharging capacity is not particularly limited and is preferably higher. However, the discharging capacity is realistically equal to or less than 700 mAh/g and is generally equal to or less than 500 mAh/g. In this specification, "mAh/g" represents the capacity per 1 g of the negative-electrode material.

(Conditions for Producing Half Cell)

Conditions for producing the half cell will be described below.

A negative electrode formed of the above-mentioned negative-electrode material is used. More specifically, an electrode formed of a composition in which a negative-electrode material, carboxymethyl cellulose, styrene-butadiene rubber, and acetylene black are mixed at a weight ratio of 100:1.5:3.0:2.0 is used.

The counter electrode is formed of metallic lithium.

A solution in which $LiPF_6$ is dissolved at a ratio of 1 M in a carbonate-based solvent (a mixed solvent in which ethylene carbonate and diethyl carbonate are mixed at a volume ratio of 1:1) is used as the electrolyte solution.

The negative electrode can be produced, for example, as described below.

First, a predetermined amount of negative-electrode material, carboxymethyl cellulose, styrene-butadiene rubber, acetylene black, and water are stirred and mixed to prepare slurry. The acquired slurry is applied to a copper foil as a collector, is subjected to a preliminary drying process at 60°C for 2 hours, and is then subjected to a vacuum drying process at 120°C for 15 hours. Subsequently, by cutting out the resultant in a predetermined size, a negative electrode formed of the negative-electrode material can be obtained.

The negative electrode has a disk shape with a diameter of 13 mm, the negative-electrode active material layer (a part of the negative electrode other than the collector) has a disk shape with a thickness of 50 $\mu$m, and the counter electrode (an electrode formed of metallic lithium) has a disk shape with a diameter of 12 mm and a thickness of 1 mm.

The half cell has a 2032-ype coin cell shape.

(Charging and Discharging Conditions)

The charging and discharging conditions of the half cell are as follows.

Measurement temperature: 25°

Charging method: constant-current constant-voltage method, Charging current: 25 mA/g, Charging voltage: 0 mV, Charging cutoff current: 2.5 mA/g

Discharging method: constant-current method, Discharging current: 25 mA/g, Discharging cutoff voltage: 2.5 V

The "charging" of the half cell means that lithium ions are made to migrate from the electrode formed of metallic lithium to the electrode formed of the negative-electrode material with application of a voltage. The "discharging" means that lithium ions are made to migrate from the electrode formed of the negative-electrode material to the electrode formed of metallic lithium.

<Method of Producing Negative-Electrode Material>

A method of producing the negative-electrode material according to this embodiment will be described below.

The negative-electrode material according to this embodiment can be produced by performing a carbonization process under appropriate conditions, for example, using a specific resin composition as a source material.

The production of the negative-electrode material using a resin composition as a source material has been performed in the related art. However, in this embodiment, factors such as (1) composition of the resin composition, (2) conditions of the carbonization process, and (3) an occupation ratio of the source material in a space in which the carbonization process is performed are highly controlled. In order to obtain the negative-electrode material according to this embodiment, it is important to highly control these factors.

Particularly, in order to obtain the negative-electrode material according to this embodiment, the inventors of the present invention found that it is important to appropriately set the factors (1) and (2) and then to set (3) the occupation ratio of the source material in the space in which the carbonization process is performed to be lower than the level in the related art.

An example of the method of producing the negative-electrode material according to this embodiment will be described below. Here, the method of producing the negative-electrode material according to this embodiment is not limited to the following example.

(Resin Composition)

First, (1) a resin composition to be carbonized is selected as the source material of the negative-electrode material.

Examples of the resin included in the resin composition serving as a source material of the negative-electrode material according to this embodiment include thermosetting resins; thermoplastic resins; petroleum or coal tar or pitch such as petroleum tar or pitch secondarily produced at the time of producing ethylene, coal tar produced at the time of dry-distilling coal, heavy components or pitch obtained by removing low-boiling-point components of coal tar by distillation, and tar or pitch obtained by liquefying coal; products obtained by crosslinking the tar or pitch; and natural polymer materials such as coconut husk or timber. One or two or more types thereof can be used in combination. Among these examples, the thermosetting resins can be preferably used in that they can be purified in a raw material step, a negative-electrode material having small impurities is obtained, and processes for purification can be greatly reduced to cause a decrease in cost.

Examples of the thermosetting resin include phenol resins such as novolac-type phenol resin and a resol-type phenol resin; epoxy resins such as a Bisphenol-type epoxy resin and a novolac-type epoxy resin; melamine resins; urea resins; aniline resins; cyanate resins; furan resins; ketone resins; unsaturated polyester resins; and urethane resins. Modifications obtained by modifying these examples into various components may be used.

Among these, phenol resins such as novolac-type phenol resin and a resol-type phenol resin; melamine resins; urea resins; and aniline resins, which are resins using formaldehyde, can be preferably used for the reason of a high residual carbon ratio.

When a thermosetting resin is used, a curing agent thereof can be used together.

Examples of the curing agent used for a novolac-type phenol resin include hexamethylene tetramine, a resol-type phenol resin, polyacetal, and paraformaldehyde. Hexamethylene tetramine or the like can be used as the curing agent for a resol-type phenol resin, a melamine resin, an urea resin, and aniline resin

The mixing content of the curing agent is generally equal to or more than 0.1 parts by weight and equal to or less than 50 parts by weight with respect to 100 parts by weight of the thermosetting resin.

An additive in addition to the thermosetting resin and the curing agent can be mixed into the resin composition as a source material of the negative-electrode material.

The additive used herein is not particularly limited, and examples thereof include carbon precursors carbonized at a temperature of 200°C to 800°C, organic acids, inorganic acids, nitrogen-containing compounds, oxygen-containing compounds, aromatic compounds, and nonferrous metal elements. These additives can be used singly or in a combination of two or more types depending on the type or the characteristics of the resin to be used.

The method of producing the resin composition is not particularly limited, and can employ (1) a method of melting and mixing the resin and other components, (2) a method of mixing the resin and other components by dissolution in a solvent, (3) a method of pulverizing and mixing the resin and other components, and the like.

The apparatus producing the resin composition is not particularly limited, but kneading apparatuses such as kneaders and a uniaxial or biaxial kneader can be used, for example, when the melting and mixing method is performed. When the dissolving and mixing method is performed, mixers such as a Henschel mixer and a disperser can be used. When the pulverizing and mixing method is performed, apparatuses such as a hammer mill and a jet mill can be used.

The resin composition obtained in this way may be a resin composition in which plural types of components are physically mixed alone or a resin composition of which a part chemically reacts by mechanical energy applied to the mixing (such as stirring and kneading) and thermal energy converted therefrom. Specifically, a mechanochemical reaction using mechanical energy or a chemical reaction using thermal energy may be carried out.

(Carbonization Process)

The resultant resin composition is then carbonized.

Regarding the conditions of the carbonization process, for example, the temperature is raised at a rate of 1°C/hour to 200°C/hour and the carbonization process can be performed by maintaining the resin composition at a temperature of 800°C to 3000°C under a pressure of 0.01 Pa to 101 kPa (1 atm) for 0.1 hours to 50 hours, preferably for 0.5 hours to 10 hours. The carbonization process can be preferably performed in an inert gas atmosphere of such as nitrogen and helium gas, in a substantially inert atmosphere in which a minute amount of oxygen is present in an inert gas, in a reduction gas atmosphere, or the like. Accordingly, it is possible to suppress thermal decomposition (oxidative decomposition) of a resin, thereby obtaining a desired negative-electrode material.

The conditions of temperature, time, and the like at the time of performing the carbonization process can be appropriately adjusted so as to optimize the characteristics of the negative-electrode material.

A preliminary carbonization process may be performed before performing the carbonization process.

The conditions of the preliminary carbonization process are not particularly limited, and an example thereof includes a temperature of 200°C to 1000°C and a time of 1 hour to 10 hours. In this way, by performing the preliminary carbonization process before performing the carbonization process, it is possible to prevent the pulverized resin composition from being re-fused in the carbonization process and thus to efficiently obtain a desired negative-electrode material, even when the resin composition is insolubilized and a process of pulverizing the resin composition is performed before performing the carbonization process.

A process of curing the resin composition may be performed before performing the preliminary carbonization process.

The method of the curing process is not particularly limited, but examples thereof include a method of thermally curing the resin composition by applying heat allowing a curing reaction to the resin composition and a method of together using a curing agent with a thermosetting resin. Accordingly, since the preliminary carbonization process can be performed substantially in a solid phase, the carbonization process or the preliminary carbonization process can be performed in a state where the structure of the thermosetting resin is maintained to a certain extent, thereby controlling the structure or the characteristics of the negative-electrode material.

When the carbonization process or the preliminary carbonization process is performed, metal, pigment, lubricant, antistatic agent, oxidation inhibitor, and the like may be added to the resin composition to give desired characteristics to the negative-electrode material.

When the curing process or the preliminary carbonization process is performed, the processed material may be pulverized before performing the carbonization process. In this case, it is possible to reduce unbalance in thermal history in the carbonization process and to enhance uniformity in surface state of the resultant negative-electrode material. It is also possible to improve handling properties of the processed material.

(Occupation Ratio of Source Material in Space in which Carbonization Process is Performed)

In order to obtain the negative-electrode material according to this embodiment, it is important to appropriately adjust the occupation ratio of a source material in a space in which the carbonization process is performed. Specifically, the occupation ratio of a source material in a space in which the carbonization process is performed is preferably set to be equal to or less than $10.0$ kg/m$^3$, more preferably to be equal to or less than $5.0$ kg/m$^3$, and still more preferably to be equal to or less than $1.0$ kg/m$^3$. Here, the space in which the carbonization process is performed generally represents an internal volume of a heat-treating furnace used for the carbonization process.

The level of the occupation ratio of a source material in a space in which the carbonization process is performed in the related art ranges from about $100$ kg/m$^3$ to $500$ kg/m$^3$. Accordingly, in order to obtain the negative-electrode material according to this embodiment, it is important to set the occupation ratio of a source material in a space in which the carbonization process is performed to be lower than the level in the related art.

By setting the occupation ratio of a source material in a space in which the carbonization process is performed to be equal to or less than the upper limit, it is thought that the reason for obtaining the negative-electrode material according to this embodiment is, although not clear, associated with efficient removal of gas generated from the source material (resin composition) in the carbonization process to the outside of the system.

From the above-mentioned procedure, the negative-electrode material according to this embodiment can be obtained.

<Negative-electrode Active Material>

The negative-electrode active material according to this embodiment will be described below.

The negative-electrode active material means a material from and to which alkali metal ions such as lithium ions can be input and output in an alkali metal ion battery. The negative-electrode active material according to this embodiment includes the above-mentioned negative-electrode material according to this embodiment.

The negative-electrode active material according to this embodiment may further include a negative-electrode material of a type different from the above-mentioned negative-electrode material. Examples of such a negative-electrode material include known negative-electrode materials such as silicon, silicon monoxide, and graphite materials.

Among these negative-electrode materials, the negative-electrode active material according to this embodiment preferably includes a graphite material in addition to the above-mentioned negative-electrode material according to this embodiment. Accordingly, it is possible to improve the charging and discharging capacity of the resultant alkali metal ion battery. As a result, it is possible to particularly improve the balance of the charging and discharging capacity and the charging and discharging efficiency of the resultant alkali metal ion battery.

The particle diameter (average particle diameter) of the used graphite material at the time of 50% accumulation in a volume-based cumulative distribution is preferably equal to or more than 2 $\mu$m and equal to or less than 50 $\mu$m and more preferably equal to or more than 5 $\mu$m and equal to or less than 30 $\mu$m. Accordingly, it is possible to produce a negative electrode with a high density while maintaining high charging and discharging efficiency.

<Negative Electrode of Alkali Metal Ion Battery and Alkali Metal Ion Battery>

A negative electrode of an alkali metal ion battery and an alkali metal ion battery according to this embodiment will be described below.

The negative electrode of an alkali metal ion battery (hereinafter, also simply referred to as "negative electrode") according to this embodiment is produced using the negative-electrode active material according to this embodiment. Accordingly, it is possible to provide a negative electrode having excellent storage characteristics and excellent charging and discharging capacity.

The alkali metal ion battery according to this embodiment is produced using the negative electrode according to this embodiment. Accordingly, it is possible to provide an alkali metal ion battery having excellent storage characteristics and excellent charging and discharging capacity.

The alkali metal ion battery according to this embodiment is, for example, a lithium ion battery or a sodium ion battery. A lithium ion battery will be exemplified in the following description.

Fig. 2 is a schematic diagram illustrating an example of a lithium ion battery according to this embodiment.

As shown in Fig. 2, the lithium ion battery 10 includes a negative electrode 13, a positive electrode 21, an electrolyte solution 16, and a separator 18.

The negative electrode 13 includes a negative-electrode active material layer 12 and a negative-electrode collector 14, as shown in Fig. 2.

The negative-electrode collector 14 is not particularly limited, but a known negative-electrode collector can be used and, for example, a copper foil or a nickel foil can be used.

The negative-electrode active material layer 12 is formed of the negative-electrode active material according to this embodiment.

The negative electrode 13 can be produced, for example, as follows.

1 part by weight to 30 parts by weight of a generally-known organic polymer binder (for example, fluorine-based polymers such as polyvinylidene fluoride and polytetrafluoroethylene and rubber-like polymers such as styrene-butadiene rubber, butyl rubber, and butadiene rubber) and an appropriate amount of a viscosity-adjusting solvent (such as N-methyl-2-pyrrolidone and dimethylformamide) or water are added to 100 parts by weight of the negative-electrode active material and the resultant is kneaded, whereby a negative-electrode slurry is produced.

The resultant slurry is formed in a sheet shape or a pellet shape through compression molding or roll forming, whereby the negative-electrode active material layer 12 can be obtained. The resultant negative-electrode active material layer 12 and the negative-electrode collector 14 are stacked to obtain the negative electrode 13.

The negative electrode 13 may be produced by applying and drying the obtained negative-electrode slurry to the negative-electrode collector 14.

The electrolyte solution 16 serves to a space between the positive electrode 21 and the negative electrode 13 and is a layer in which lithium ions move by charging and discharging.

The electrolyte solution 16 is not particularly limited and a generally-known electrolyte solution can be used. For example, a solution in which lithium salts as an electrolyte is dissolved in a non-aqueous solvent is used.

Examples of the non-aqueous solvent include cyclic esters such as propylene carbonate, ethylene carbonate, and $\gamma$-butyrolactone, chain-like esters such as dimethyl carbonate and diethyl carbonate, chain-like ethers such as dimethoxyethane, and mixtures thereof.

The electrolyte is not particularly limited and a generally-known electrolyte can be used. For example, lithium metal salts such as $LiClO_4$ and $LiPF_6$ can be used. The salts may be mixed with polyethylene oxide, polyacrylonitrile, or the like and the resultant may be used as a solid electrolyte.

The separator 18 is not particularly limited and a generally-known separator can be used. For example, porous films of polyethylene, polypropylene, and the like and unwoven fabrics can be used.

The positive electrode 21 includes a positive-electrode active material layer 20 and a positive-electrode collector 22, as shown in Fig. 2.

The positive-electrode active material layer 20 is not particularly limited and can be formed of a generally-known positive-electrode active material. The positive-electrode active material is not particularly limited and examples thereof include complex oxides such as lithium cobalt oxide ($LiCoO_2$), lithium nickel oxide ($LiNiO_2$), and lithium manganese oxide ($LiMn_2O_4$) and conductive polymers such as polyaniline and polypyrrol.

The positive-electrode collector 22 is not particularly limited and a generally-known positive-electrode collector can be used. For example, an aluminum foil can be used.

The positive electrode 21 in this embodiment can be produced using a generally-known method of producing a positive electrode.

While embodiments of the present invention have been described above, the embodiments are only an example of the present invention and various configurations other than described above may be employed.

The present invention is not limited to the above-mentioned embodiments and modifications, improvements, and the like within a range in which the object of the present invention can be achieved are included in the present invention.

Examples

The present invention will be described below in conjunction with examples and comparative examples, but the present invention is not limited to the examples. In the examples, "parts" represents "parts by weight".

[1] Evaluation Method of Negative-electrode Material

First, an evaluation method of negative-electrode materials obtained in examples and comparative examples to be described later will be described.

1. Grain Size Distribution

The grain size distribution of a negative-electrode material is measured using a laser diffraction grain size distribution measuring instrument LA-920 made by Horiba Ltd. and a laser diffraction method. The particle diameter ($D_{50}$, average particle diameter) of the negative-electrode material at the time of 50% accumulation in a volume-based cumulative distribution is calculated from the measurement result.

2. Specific Surface Area

A specific surface area is measured using NOVA-1200 made by Yuasa-Ionics Co. Ltd. and using a three-point BET method in nitrogen adsorption. The specific calculation method thereof is the same as described above.

3. $d_{002}$ and $L_{C(002)}$ of Negative-electrode Material

An average layer spacing $d_{002}$ of face (002) is measured using an X-ray diffraction apparatus "XRD-7000" made by Shimadzu Corporation.
The average layer spacing $d_{002}$ of face (002) is calculated from a spectrum obtained through the X-ray diffraction measurement of the negative-electrode material using the following Bragg equation.

$$\lambda = 2d_{hkl}\sin\theta \quad \text{Bragg equation } (d_{hkl} = d_{002})$$

$\lambda$: wavelength of characteristic X-ray $K_{\alpha 1}$ output from negative electrode
8: reflection angle of spectrum
$L_{C(002)}$ is measured as follows.

The value of $L_{C(002)}$ is determined from the half-value width of the peak of 002 face and the diffraction angle in the spectrum obtained by X-ray diffraction measurement using the following Scherrer equation

$$L_{C(002)} = 0.94\lambda/(\beta\cos\theta) \quad \text{(Scherrer equation)}$$

$L_{C(002)}$: size of crystallite
$\lambda$: wavelength of characteristic X-ray $K_{\alpha 1}$ output from negative electrode
$\beta$: half-value width of peak (radian)
$\theta$: reflection angle of spectrum

4. Amount of Carbon Dioxide Gas Adsorbed

The amount of carbon dioxide gas adsorbed is measured using a negative-electrode material subjected to vacuum drying at 130°C for 3 hours or more using a vacuum dryer as a measurement sample and using ASAP-2000M made by Micromeritics Instrument Corporation.
0.5 g of the measurement sample is input to a measurement sample tube, the measurement sample is subjected to vacuum drying at 300°C for 3 hours or more under a reduced pressure equal to or lower than 0.2 Pa, and the amount of carbon dioxide gas adsorbed is then measured.

The adsorption temperature is set to 0°C, the pressure is reduced until the pressure of the sample tube to which the measurement sample is input is equal to or lower than 0.6 Pa, carbon dioxide gas is introduced into the sample tube, and the amount of carbon dioxide gas adsorbed until the equilibrium pressure in the sample tube reaches 0.11 MPa (corresponding to a relative pressure of 0.032) is measured using a constant volume method and is expressed in the unit of ml/g. The adsorbed amount is a conversion value in the standard state (STP).

5. Measurement of Moisture Content using Karl Fischer's Coulometric Titration Method

The moisture content using Karl Fischer's coulometric titration method is measured in the following procedure.
(Procedure 1) 1 g of the negative-electrode material is maintained in an apparatus of mini environment test equipment (SH-241 made by ESPEC Corp.) under the conditions of a temperature of 40°C and a relative humidity of 90 %RH for 120 hours. The negative-electrode material is spread in a vessel with a length of 5 cm, a width of 8 cm, and a height of 1.5 cm so as to be as small in thickness as possible and is placed in the apparatus.
(Procedure 2) The negative-electrode material is preliminarily dried by maintaining the negative-electrode material under the conditions of a temperature of 130°C and a nitrogen atmosphere for 1 hour, and then a moisture content generated by maintaining the preliminarily-dried negative-electrode material at 200°C for 30 minutes is measured using Karl Fischer's coulometric titration method and using CA-06 made by Mitsubishi Chemical Analytech Co., Ltd.

6. Storage Characteristic

The initial efficiencies of the negative-electrode material just after being produced and the negative-electrode material after being subjected to the following storage test are measured using the following method. Then, the variations in the initial efficiencies are calculated.

(Storage Test)

1 g of the negative-electrode material is maintained in an apparatus of mini environment test equipment (SH-241 made by ESPEC Corp.) under the conditions of a temperature of 40°C and a relative humidity of 90 %RH for 7 days. The negative-electrode material is spread in a vessel with a length of 5 cm, a width of 8 cm, and a height of 1.5 cm so as to be as small in thickness as possible and is placed in the apparatus. Thereafter, the negative-electrode material is dried by maintaining the negative-electrode material under the conditions of a temperature of 130° and the nitrogen atmosphere for 1 hour.

(1) Production of Half Cell

1.5 parts of carboxymethyl cellulose (CMC Daicel 2200 made by DAICEL FINECHEM LTD.), 3.0 parts of styrene-butadiene rubber (TRD-2001 made by JSR Corporation), 2.0 parts of acetylene black (DENKA BLACK made by DENKI KAGAKU KOGYO KABUSHIKI KAISHA), and 100 parts of distilled water are added to 100 parts of the negative-electrode materials obtained in the examples and the comparative examples to be described later, and the resultant is stirred and mixed by the use of a rotation-revolution mixer to produce negative-electrode slurry.
The produced negative-electrode slurry is applied to one surface of a copper foil (NC-WS made by Furukawa Electric Co., Ltd.) with a thickness of 14 $\mu$m, the resultant is preliminarily dried in air of 60°C for 2 hours, and then the resultant is subjected to vacuum drying at 120°C for 15 hours. After the vacuum drying, an electrode is press-molded by the use of a roll press. The resultant is cut out in a disk shape with a diameter of 13 mm to produce a negative electrode. The thickness of the negative-electrode active material layer is 50 $\mu$m.
Metal lithium is formed in a disk shape with a diameter of 12 mm and a thickness of 1 mm to produce a counter electrode. A porous film of polyolefin (product name: CELGARD 2400, made by CELGARD Corporation) is used as the separator.
A bipolar half cell having a 2032 coil cell shape is produced in a glove box in an argon atmosphere using the negative electrode, the counter electrode, and the separator and using a solution in which $LiPF_6$ is added at a ratio of 1 M to a mixed solvent of ethylene carbonate and diethyl carbonate at a volume ratio of 1:1 as the electrolyte solution, and the half cell is evaluated as follows.

(2) Charging and Discharging of Half Cell

Charging and discharging operations are performed under the following conditions.
Measurement temperature: 25°
Charging method: constant-current constant-voltage method, Charging current: 25 mA/g, Charging voltage: 0 mV, Charging cutoff current: 2.5 mA/g

Discharging method: constant-current method, Discharging current: 25 mA/g, Discharging cutoff voltage: 2.5 V

The charging capacity and the discharging capacity [mAh/g] per 1 g of the negative electrode material are calculated on the basis of the values of the charging capacity and the discharging capacity measured under the above-mentioned conditions. The initial efficiency and the initial efficiency variation are calculated using the following expressions.

$$\text{Initial efficiency [\%]}=100\times(\text{discharging capacity})/(\text{charging capacity})$$

$$\text{Initial efficiency variation [\%]}=100\times(\text{initial efficiency after storage test})/(\text{initial efficiency just after production})$$

7. Pore Volume

The pore volume using a mercury intrusion method is measured using Autopore III 9420 made by Micromeritics Instrument Corporation.

The negative-electrode material is input to a sample vessel and is degassed with a pressure of 2.67 Pa or less for 30 minutes. Then, mercury is introduced into the sample vessel and the sample vessel is slowly pressurized to intrude mercury into the pores of the negative-electrode material (with a maximum pressure of 414 MPa). The pore volume distribution of the negative-electrode material is measured using the following expression from the relationship between the pressure and the amount of mercury intruded. The volume of mercury intruded into the negative-electrode material from a pressure (0.25 MPa) corresponding to a pore diameter of 5 $\mu$m to the maximum pressure (414 MPa: corresponding to a pore diameter of 3 nm) is set as a pore volume with a pore diameter of 5 $\mu$m or less. In calculation of the pore diameter, when mercury is intruded into a cylindrical pore with a diameter of D under a pressure of P and it is assumed that the surface tension of mercury is defined as γ and the contact angle between mercury and the pore wall is defined as θ, the following expression is established from the balance of the surface tension and the pressure acting on the pore cross-section.

$$-\pi D\pi\gamma\cos\theta=\pi(D/2)^2\cdot P$$

$$D=(-4\gamma\cos\theta)/P$$

Here, the relationship between the pressure P and the pore diameter D is calculated using the following expression by setting the surface tension of mercury to 484 dyne/cm, setting the contact angle between mercury and carbon to 130 degrees, expressing the pressure P in the unit of MPa, and expressing the pore diameter D in the unit of $\mu$m.

$$D=1.27/P$$

8. Measurement of Density

$\rho^B$ is measured using a butanol method on the basis of the method defined in JIS R7212.

$\rho^H$ is measured using a dry density meter AccuPyc 1330 made by Micromeritics Japan after the sample is dried at 120°C for 2 hours. The measurement is performed at 23°C. All the pressures are gauge pressures and are pressures obtained by subtracting the ambient pressure from the absolute pressure.

The measurement equipment includes a sample chamber and an expansion chamber, and the sample chamber includes a pressure meter measuring the pressure of the sample chamber. The sample chamber and the expansion chamber are connected to each other via a connecting pipe having a valve. A helium gas introduction pipe having a stop valve is connected to the sample chamber, and a helium gas discharge tube having a stop valve is connected to the expansion chamber.

The measurement is performed as follows. The volume ($V_{CELL}$) of the sample chamber and the volume ($V_{EXP}$) of the expansion chamber are measured in advance using a bogey tube.

A sample is input to the sample chamber, the inside of the drift apparatus is replaced with helium gas through the helium gas introduction pipe of the sample chamber, the connecting pipe, and the helium gas discharge pipe of the expansion chamber for 2 hours. Then, the valve between the sample chamber and the expansion chamber and the value of the helium gas discharge pipe from the expansion chamber are closed and helium gas is introduced from the helium gas introduction pipe of the sample chamber until 134 kPa. Thereafter, the stop valve of the helium gas introduction pipe is closed. The pressure ($P_1$) of the sample chamber is measured in 5 minutes after the stop valve is closed. Then, the valve between the sample chamber and the expansion chamber is opened to transfer the helium gas to the expansion chamber and the pressure ($P_2$) at that time is measured.

The volume ($V_{SAMP}$) of the sample is calculated using the following expression.

$$V_{SAMP} = V_{CELL} - V_{EXP} / [(P_1/P_2) - 1]$$

Therefore, when the weight of the sample is defined as $W_{SAMP}$, the density is $\rho^H = W_{SAMP}/V_{SAMP}$.

9. Observation of Cross-section of Negative-electrode Material using Optical Microscope

About 10 wt% of the negative-electrode material is added to a liquid-phase epoxy resin, the resultant is mixed well, and the resultant is filled in a mold to embed the negative-electrode material in the epoxy resin. Subsequently, the epoxy resin is cured by maintaining the epoxy resin at 120°C for 24 hours. Thereafter, the cured epoxy resin is cut at an appropriate position so as to expose the negative-electrode material from the surface, and the cut face is polished in a mirror surface. Then, a cross-section of the negative-electrode material is observed and photographed in a bright field at 1000 times magnification using an optical microscope (Axioskop2 MAT made by Carl Zeiss AG).

10. Measurement of Total Adsorbed Amount

1 g of the negative-electrode material is subjected to vacuum drying at 200°C for 24 hours and then the weight of the negative-electrode material is measured. Subsequently, the resultant is maintained in the mini environment test equipment (SH-241 made by ESPEC Corp.) under the conditions of at 40°C and a relative humidity of 90 %RH for 120 hours. The negative-electrode material is spread in a vessel with a length of 5 cm, a width of 8 cm, and a height of 1.5 cm so as to be as small in thickness as possible and is placed in the apparatus. Thereafter, the weight of the negative-electrode material is measured and the total adsorbed amount is measured using the following expression.

```
Total adsorbed amount [%]=100×(weight after
maintenance of 120 hours-weight after vacuum
drying)/(weight after vacuum drying)
[0106]
```

[2] Production of Negative-electrode Material

(Example 1)

Oxidized pitch was produced on the basis of the method described in paragraph 0051 of Japanese Unexamined Patent Publication No. 8-279358. Subsequently, the oxidized pitch was used as a source material to perform a procedure of processes (a) to (f), whereby Negative-electrode material 1 was obtained.

(a) 510 g of oxidized pitch was spread in a heat-treating furnace with an internal volume of 60 L (with a length of 50 cm, a width of 40 cm, and a height of 30 cm) so as to be as small in thickness as possible and is placed therein. Thereafter, the temperature was raised at 100°C/hour from the room temperature to 500°C without performing any one of replacement of reducing gas, replacement of inert gas, flowing of reducing gas, and flowing of inert gas.

(b) Subsequently, the resultant was subjected to a defatting process at 500°C for 2 hours without performing any one of replacement of reducing gas, replacement of inert gas, flowing of reducing gas, and flowing of inert gas and was then cooled.

(c) The obtained powder is pulverized by the use of a vibrating ball mill.

(d) Thereafter, 204 g of the obtained powder was spread in a heat-treating furnace with an internal volume of 24 L (with a length of 40 cm, a width of 30 cm, and a height of 20 cm) so as to be as small in thickness as possible and is placed therein. Subsequently, the temperature was raised at 100°C/hour from the room temperature to 1200°C under replacement and flowing of inert gas (nitrogen).

(e) Under flowing of inert gas (nitrogen), the resultant was maintained at 1200°C for 8 hours to carbonize the resultant.

(f) Under flowing of inert gas (nitrogen), the resultant was naturally cooled to 600°C and was then cooled at 100°C/hour from 600°C to 100°C.

The occupation ratio of the source material in a space in which the carbonization process is performed was 8.5 kg/m$^3$.

(Example 2)

Phenol resin PR-55321B (made by Sumitomo Bakelite Co., Ltd.) which is a thermosetting resin was used as a source material to perform a procedure of processes (a) to (f), whereby Negative-electrode material 2 was obtained.

(a) 510 g of thermosetting resin was spread in a heat-treating furnace with an internal volume of 60 L (with a length of 50 cm, a width of 40 cm, and a height of 30 cm) so as to be as small in thickness as possible and is placed therein. Thereafter, the temperature was raised at 100°C/hour from the room temperature to 500°C without performing any one of replacement of reducing gas, replacement of inert gas, flowing of reducing gas, and flowing of inert gas.

(b) Subsequently, the resultant was subjected to a defatting process at 500°C for 2 hours without performing any one of replacement of reducing gas, replacement of inert gas, flowing of reducing gas, and flowing of inert gas and was then cooled.

(c) The obtained powder is pulverized by the use of a vibrating ball mill.

(d) Thereafter, 204 g of the obtained powder was spread in a heat-treating furnace with an internal volume of 24 L (with a length of 40 cm, a width of 30 cm, and a height of 20 cm) so as to be as small in thickness as possible and is placed therein. Subsequently, the temperature was raised at 1.00°C/hour from the room temperature to 1200°C under replacement and flowing of inert gas (nitrogen).

(e) Under flowing of inert gas (nitrogen), the resultant was maintained at 1200°C for 8 hours to carbonize the resultant.

(f) Under flowing of inert gas (nitrogen), the resultant was naturally cooled to 600°C and was then cooled at 100°C/hour from 600°C to 100°C.

The occupation ratio of the source material in a space in which the carbonization process is performed was 8.5 kg/m$^3$.

(Example 3)

Negative-electrode material 3 was produced using the same method as in Example 2, except that the occupation ratio of the source material in a space in which the carbonization process is performed was changed to 3.5 kg/m$^3$.

(Example 4)

Negative-electrode material 4 was produced using the same method as in Example 2, except that the occupation ratio of the source material in a space in which the carbonization process is performed was changed to 0.9 kg/m$^3$.

(Example 5)

Negative-electrode material 5 was produced using the same method as in Example 2, except that the occupation ratio of the source material in a space in which the carbonization process is performed was changed to 0.5 kg/m$^3$.

(Comparative Example 1)

Negative-electrode material 6 was produced using the same method as in Example 1, except that the occupation ratio of the source material in a space in which the carbonization process is performed was changed to 16 kg/m$^3$.

(Comparative Example 2)

Negative-electrode material 7 was produced using the same method as in Example 2, except that the occupation ratio of the source material in a space in which the carbonization process is performed was changed to 16 kg/m$^3$.

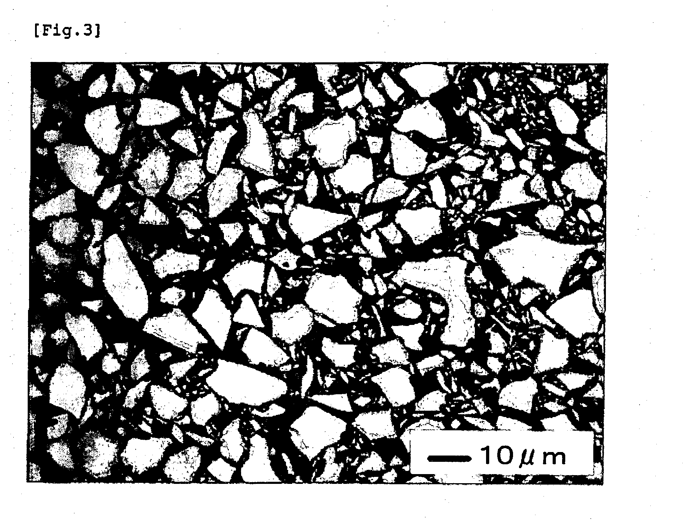

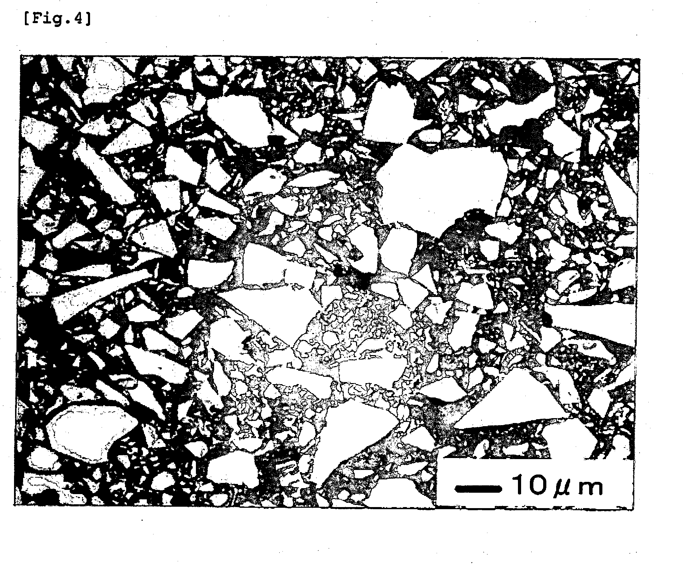

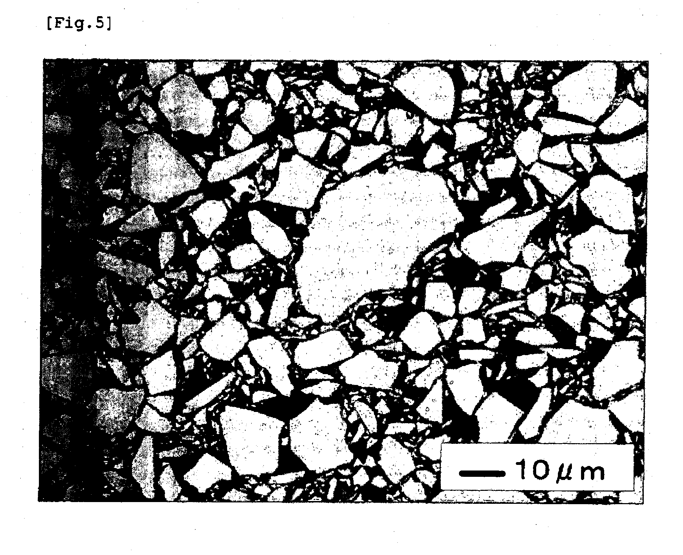

Negative-electrode materials 1 to 7 obtained in the examples and the comparative examples were subjected to the above-mentioned various evaluations. The evaluation results are shown in Table 1. Optical-microscope photographs of cross-sections of the negative-electrode materials obtained in Example 1, Example 5, and Comparative Example 1 are shown in Figs. 3, 4, and 5, respectively.

In the negative-electrode materials obtained in Examples 1 to 5, the first region and the second region having different reflectance ratios were observed and the reflectance ratio discontinuously varied at the interface between the first region and the second region. In the negative-electrode materials obtained in Examples 1 to 5, the first region was present along the outer edge of a cross-section of each negative-electrode material and the second region having a reflectance ratio larger than that of the first region was present inside the first region.

A lithium ion battery using the negative-electrode material having such a structure was excellent in storage characteristic and charging and discharging capacity.

On the other hand, the first region and the second region having different reflectance ratios were not observed in the negative-electrode materials obtained in Comparative Examples 1 and 2. A lithium ion battery using the negative-electrode material having such a structure was poorer in storage characteristic and charging and discharging capacity than the negative-electrode materials obtained in Examples 1 to 5.

Table 1

| | Ex. 1 | Ex. 2 | Ex. 3 | Ex. 4 | Ex. 5 | Com. Ex. 1 | Com. Ex. 2 |
|---|---|---|---|---|---|---|---|
| Production method | | | | | | | |
| Source material | Petroleum pitch | Thermosetting resin | Thermosetting resin | Thermosetting resin | Thermosetting resin | Petroleum pitch | Thermosetting resin |
| Space occupying ratio [kg/m³] | 8.5 | 8.5 | 3.5 | 0.9 | 0.5 | 16.0 | 16.0 |
| Physical property of negative-electrode material | | | | | | | |
| Moisture content by Karl Fischer method (200°C) | 0.19 | 0.14 | 0.08 | 0.05 | 0.04 | 0.25 | 0.23 |
| Total amount of moisture adsorbed [%] | 2.0 | 2.4 | 2.4 | 2.0 | 2.2 | 2.4 | 2.5 |
| Specific surface area [m²/g] | 5.3 | 5.2 | 5.5 | 5.7 | 5.9 | 0.9 | 17 |
| Amount of $CO_2$ adsorbed [mL/g] | 9.5 | 9.4 | 7.5 | 7.4 | 5.5 | 11.0 | 12.0 |
| Helium density/ butanol density | 1.13 | 1.12 | 1.10 | 1.09 | 1.13 | 1.3 | 1.29 |
| | Ex. 1 | Ex. 2 | Ex. 3 | Ex. 4 | Ex. 5 | Com. Ex. 1 | Com. Ex. 2 |
| Helium density [g/cm³] | 1.93 | 1.91 | 1.91 | 1.89 | 1.93 | 2.10 | 2.09 |
| Butanol density [g/cm³] | 1.71 | 1.71 | 1.74 | 1.73 | 1.71 | 1.62 | 1.62 |
| Pore volume with pore diameter of 0.003 μm to 5 μm [mL/g] | 0.52 | 0.49 | 0.48 | 0.48 | 0.47 | 0.58 | 0.60 |
| Average particle diameter $D_{50}$ [μm] | 9.0 | 8.8 | 8.7 | 8.5 | 8.9 | 10.0 | 9.5 |
| Average layer spacing [nm] | 0.375 | 0.368 | 0.370 | 0.373 | 0.370 | 0.372 | 0.371 |
| Crystallite size [nm] | 4.5 | 3.5 | 2.5 | 2.4 | 1.5 | 6.0 | 5.5 |
| observation of cross-section of negative-electrode material using optical microscope | | | | | | | |
| First region and second region having different reflectance ratios | Present | Present | Present | Present | Present | Absent | Absent |
| Reflectance of interface between first region and second region | Discontinuous variation | Discontinuous variation | Discontinuous variation | Discontinuous variation | Discontinuous variation | - | - |
| Battery characteristics | | | | | | | |

(continued)

|  | Ex. 1 | Ex. 2 | Ex. 3 | Ex. 4 | Ex. 5 | Com. Ex. 1 | Com. Ex. 2 |
|---|---|---|---|---|---|---|---|
| Just after production |  |  |  |  |  |  |  |
| Charging capacity [mAh/g] | 411 | 414 | 461 | 486 | 507 | 410 | 408 |
| Discharging capacity [mAh/g] | 362 | 364 | 406 | 428 | 446 | 361 | 359 |
| Initial efficiency [%] | 88 | 88 | 88 | 88 | 88 | 88 | 88 |
| After storage test |  |  |  |  |  |  |  |
| Charging capacity [mAh/g] | 436 | 426 | 472 | 491 | 506 | 462 | 449 |
| Discharging capacity [mAh/g] | 362 | 362 | 406 | 427 | 445 | 360 | 359 |
| Initial efficiency [%] | 83 | 85 | 86 | 87 | 88 | 78 | 80 |
| Variation of initial efficiency [%] | 94 | 97 | 98 | 99 | 100 | 89 | 91 |

**Claims**

1.  A carbonaceous negative-electrode material of which an average layer spacing $d_{002}$ of face (002) calculated by an X-ray diffraction method using CuK$\alpha$ radiation as a radiation source is equal to or more than 0.365 nm and that is for an alkali metal ion battery,
    wherein when the negative-electrode material is embedded in an epoxy resin, the epoxy resin is cured, the resultant cured material is cut and polished to expose a cross-section of the negative-electrode material, and the cross-section is observed in a bright field with 1000 times magnification using an optical microscope,
    the cross-section of the negative-electrode material includes a first region (101) and a second region (103) having different reflectance ratios,
    wherein the first region exists along the outer edge of the cross-section of the negative-electrode material, and wherein the second region exists inside the first region.

2.  The negative-electrode material according to claim 1,
    wherein the reflectance ratio discontinuously varies at the interface between the first region and the second region.

3.  The negative-electrode material according to claim 1,
    wherein the reflectance ratio (B) of the second region is larger than the reflectance ratio (A) of the first region.

4.  The negative-electrode material according to any one of claims 1 to 3,
    wherein when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and maintaining the preliminarily-dried negative-electrode material at 200°C for 30 minutes is measured using a Karl Fischer coulometric titration method, the moisture content generated from the preliminarily-dried negative-electrode material is equal to or less than 0.20 wt% with respect to 100 wt% of the preliminarily-dried negative-electrode material.

5.  The negative-electrode material according to any one of claims 1 to 4,
    wherein a discharging capacity is equal to or more than 360 mAh/g, when a half cell, which is manufactured using the negative-electrode material as a negative electrode, using metallic lithium as a counter electrode, and using a solution in which $LiPF_6$ is dissolved in a carbonate-based solvent at a ratio of 1 M as an electrolyte solution, is charged at 25°C using a constant-current constant-voltage method under conditions of a charging current of 25 mA/g, a charging voltage of 0 mV, and a charging cutoff current of 2.5 mA/g and is discharged using a constant-current method under conditions of a discharging current of 25 mA/g and a discharging cutoff voltage of 2.5 V.

6.  The negative-electrode material according to any one of claims 1 to 5,
    wherein a particle diameter $D_{50}$ at the time of 50% accumulation in a volume-based cumulative distribution is equal to or more than 1 $\mu$m and equal to or less than 50 $\mu$m.

7.  The negative-electrode material according to any one of claims 1 to 6,
    wherein a specific surface area measured using a three-point BET method in nitrogen adsorption is equal to or more than 1 m$^2$/g and equal to or less than 15 m$^2$/g.

8.  The negative-electrode material according to any one of claims 1 to 7,
    wherein an amount of carbon dioxide gas adsorbed is less than 10 ml/g.

9.  The negative-electrode material according to any one of claims 1 to 8,
    wherein a pore volume in which a pore diameter measured using a mercury intrusion method ranges from 0.003 $\mu$m to 5 $\mu$m is less than 0.55 ml/g.

10. The negative-electrode material according to any one of claims 1 to 9,
    wherein a density ($\rho^B$) measured using butanol as a replacement medium is equal to or more than 1.50 g/cm$^3$ and equal to or less than 1.80 g/cm$^3$.

11. The negative-electrode material according to any one of claims 1 to 10,
    wherein a density ($\rho^H$) measured using helium gas as a replacement medium is equal to or more than 1.80 g/cm$^3$ and equal to or less than 2.10 g/cm$^3$.

12. A negative-electrode active material comprising the negative-electrode material according to any one of claims 1 to 11.

13. The negative-electrode active material according to claim 12, further comprising a type of negative-electrode material different from the negative-electrode material.

14. The negative-electrode active material according to claim 13,
wherein the different type of negative-electrode material is a graphite material.

15. A negative electrode comprising the negative-electrode active material according to any one of claims 12 to 14.

16. An alkali metal ion battery comprising at least the negative electrode for an alkali metal ion battery according to claim 15, an electrolyte, and a positive electrode.

17. The alkali metal ion battery according to claim 16,
wherein the alkali metal ion battery is a lithium ion battery or a sodium ion battery.


**Patentansprüche**

1. Kohlenstoffhaltiges Material für eine negative Elektrode, bei welchem ein durchschnittlicher Schichtabstand $d_{002}$ der Fläche (002), berechnet durch ein Röntgenbeugungs-Verfahren unter Verwendung von CuK$\alpha$-Strahlung als eine Strahlungsquelle, gleich oder mehr als 0,365 nm ist und das für eine Alkalimetall-Ionen-Batterie ist,
wobei, wenn das Material für eine negative Elektrode in einem Epoxidharz eingebettet wird, das Epoxidharz ausgehärtet wird, das daraus resultierende ausgehärtete Material geschnitten und poliert wird, um einen Querschnitt des Materials für eine negative Elektrode freizulegen, und der Querschnitt in einem Hellfeld mit 1000-facher Vergrößerung unter Verwendung eines optischen Mikroskops betrachtet wird,
der Querschnitt des Materials für eine negative Elektrode eine erste Region (101) und eine zweite Region (103) umfasst, die unterschiedliche Reflexionsgrad-Anteile aufweisen,
wobei die erste Region entlang der äußeren Kante des Querschnitts des Materials für eine negative Elektrode vorliegt, und
wobei die zweite Region innerhalb der ersten Region vorliegt.

2. Material für eine negative Elektrode nach Anspruch 1,
wobei der Reflexionsgrad-Anteil diskontinuierlich an der Grenzfläche zwischen der ersten Region und zweiten Region variiert.

3. Material für eine negative Elektrode nach Anspruch 1,
wobei der Reflexionsgrad-Anteil (B) der zweiten Region größer ist als der Reflexionsgrad-Anteil (A) der ersten Region.

4. Material für eine negative Elektrode nach einem der Ansprüche 1 bis 3,
wobei, wenn ein Feuchtegehalt, der durch Halten des Materials für eine negative Elektrode unter Bedingungen von einer Temperatur von 40°C und einer relativen Feuchtigkeit von 90 %RH für 120 Stunden, Halten des Materials für eine negative Elektrode unter Bedingungen von einer Temperatur von 130°C und einer Stickstoff-Atmosphäre für 1 Stunde, um das Material für eine negative Elektrode vorläufig zu trocknen, und Halten des vorläufig getrockneten Materials für eine negative Elektrode bei 200°C für 30 Minuten erzeugt wird, unter Verwendung eines coulometrischen Titrations-Verfahrens nach Karl Fischer gemessen wird, der Feuchtegehalt, der durch das vorläufig getrocknete Material für eine negative Elektrode erzeugt wird, gleich oder weniger als 0,20 Gew.% in Bezug auf 100 Gew.% des vorläufig getrockneten Materials für eine negative Elektrode ist.

5. Material für eine negative Elektrode nach einem der Ansprüche 1 bis 4,
wobei eine Entladekapazität gleich oder mehr als 360 mAh/g ist, wenn eine halbe Zelle, welche unter Verwendung des Materials für eine negative Elektrode als eine negative Elektrode, unter Verwendung von metallischem Lithium als eine Gegenelektrode und unter Verwendung einer Lösung, in der LiPF$_6$ in einem karbonat-basierten Lösungsmittel bei einem Verhältnis von 1 M gelöst wird, als eine Elektrolytlösung hergestellt wird, bei 25°C unter Verwendung eines Konstanter-Strom-Kontante-Spannung-Verfahrens, unter Bedingungen von einem Ladestrom von 25 mA/g, einer Ladespannung von 0 mV und einem Lade-Abschaltstrom von 2,5 mA/g geladen wird und unter Verwendung eines Konstanter-Strom-Verfahrens unter Bedingungen von einem Entladestrom von 25 mA/g und einer Entlade-Abschaltspannung von 2,5 V entladen wird.

6. Material für eine negative Elektrode nach einem der Ansprüche 1 bis 5, wobei ein Partikeldurchmesser $D_{50}$ zum Zeitpunkt einer 50%-Akkumulation in einer volumen-basierten, kumulativen Verteilung gleich oder mehr als 1 $\mu$m und gleich oder weniger als 50 $\mu$m ist.

7. Material für eine negative Elektrode nach einem der Ansprüche 1 bis 6, wobei eine spezifische Fläche, die durch Verwendung eines Drei-Punkt-BET-Verfahrens mit Stickstoff-Adsorption gemessen wird, gleich oder mehr als 1 m$^2$/g und gleich oder weniger als 15 m$^2$/g ist.

8. Material für eine negative Elektrode nach einem der Ansprüche 1 bis 7, wobei eine Menge von adsorbiertem Kohlendioxid-Gas weniger als 10 ml/g ist.

9. Material für eine negative Elektrode nach einem der Ansprüche 1 bis 8, wobei ein Porenvolumen, wenn ein Porendurchmesser, der unter Verwendung eines Quecksilber-Intrusions-Verfahrens gemessen wird, sich von 0,003 $\mu$m bis 5 $\mu$m bewegt, weniger als 0,55 ml/g ist.

10. Material für eine negative Elektrode nach einem der Ansprüche 1 bis 9, wobei eine Dichte ($\rho^B$), die unter Verwendung von Butanol als ein Ersatzmedium gemessen wird, gleich oder mehr als 1,50 g/cm$^3$ und gleich oder weniger als 1,80 g/cm$^3$ ist.

11. Material für eine negative Elektrode nach einem der Ansprüche 1 bis 10, wobei eine Dichte ($\rho^H$), die unter Verwendung von Heliumgas als ein Ersatzmedium gemessen wird, gleich oder mehr als 1,80 g/cm$^3$ und gleich oder weniger als 2,10 g/cm$^3$ ist.

12. Aktives Material für eine negative Elektrode, umfassend das Material für eine negative Elektrode nach einem der Ansprüche 1 bis 11.

13. Aktives Material für eine negative Elektrode nach Anspruch 12, ferner umfassend eine Art von Material für eine negative Elektrode, die unterschiedlich ist zu dem Material für eine negative Elektrode.

14. Aktives Material für eine negative Elektrode nach Anspruch 13, wobei die unterschiedliche Art von Material für eine negative Elektrode ein Graphit-Material ist.

15. Negative Elektrode, umfassend das aktive Material für eine negative Elektrode nach einem der Ansprüche 12 bis 14.

16. Alkalimetall-Ionen-Batterie, umfassend zumindest die negative Elektrode für eine Alkalimetall-Ionen-Batterie nach Anspruch 15, einen Elektrolyten und eine positive Elektrode.

17. Alkalimetall-Ionen-Batterie nach Anspruch 16, wobei die Alkalimetall-Ionen-Batterie eine Lithium-Ionen-Batterie oder eine NatriumIonen-Batterie ist.

## Revendications

1. Matériau carboné d'électrode négative dont un espacement de couches moyen $d_{002}$ de la face (002) calculé par une méthode de diffraction aux rayons X utilisant la radiation CuK$\alpha$ comme source de radiation est égal à ou supérieur à 0,365 nm, et qui est destiné à une batterie à ions de métal alcalin, tandis que, quand le matériau d'électrode négative est intégré dans une résine époxy, la résine époxy est durcie, le matériau durci résultant est découpé et poli pour exposer une section transversale du matériau d'électrode négative, et la section transversale est observée dans un champ large avec une amplification de 1000 fois au moyen d'un microscope optique, la section transversale du matériau d'électrode négative comprend une première région (101) et une deuxième région (103) ayant des rapports de réflectance différents, tandis que la première région se trouve le long du bord extérieur de la section transversale du matériau d'électrode négative, et tandis que la deuxième région se trouve à l'intérieur de la première région.

**2.** Matériau d'électrode négative selon la revendication 1,
dans lequel le rapport de réflectance varie de manière discontinue à l'interface entre la première région et la deuxième région.

**3.** Matériau d'électrode négative selon la revendication 1,
dans lequel le rapport de réflectance (B) de la deuxième région est plus élevé que le rapport de réflectance (A) de la première région.

**4.** Matériau d'électrode négative selon l'une quelconque des revendications 1 à 3,
dans lequel, quand une teneur en humidité générée par le maintien du matériau d'électrode négative dans les conditions d'une température de 40°C et d'une humidité relative de 90%RH pendant 120 heures, le maintien du matériau d'électrode négative dans les conditions d'une température de 130°C et d'une atmosphère d'azote pendant 1 heure pour sécher au préalable le matériau d'électrode négative, et le maintien du matériau d'électrode négative séché au préalable à 200°C pendant 30 minutes, est mesurée au moyen d'une méthode de titrage coulométrique de Karl Fischer, la teneur en humidité générée à partir du matériau d'électrode négative préalablement séché est égale ou inférieure à 0,20% en poids par rapport à 100% en poids du matériau d'électrode négative préalablement séché.

**5.** Matériau d'électrode négative selon l'une quelconque des revendications 1 à 4,
dans lequel une capacité de décharge est égale ou supérieure à 360 mAh/g, quand une demi-cellule qui est produite au moyen du matériau d'électrode négative à titre d'électrode négative, par utilisation de lithium métallique à titre de contre-électrode, et par utilisation d'une solution dans laquelle le $LiPF_6$ est dissous dans un solvant à base de carbonate dans un rapport de 1 M à titre de solution d'électrolyte, est chargée à 25°C au moyen d'une méthode à tension constante et à courant constant, dans les conditions d'un courant de charge de 25 mA/g, d'une tension de charge de 0 mV, et d'un courant de coupure de charge de 2,5 mA/g, et est déchargée au moyen d'une méthode à courant constant dans les conditions d'un courant de décharge de 25 mA/g et une tension de coupure de décharge de 2,5 V.

**6.** Matériau d'électrode négative selon l'une quelconque des revendications 1 à 5,
dans lequel un diamètre de particules $D_{50}$ au moment de 50% d'accumulation dans une distribution cumulative sur base volumique est égal ou supérieur à 1 $\mu$m et égal ou inférieur à 50 $\mu$m.

**7.** Matériau d'électrode négative selon l'une quelconque des revendications 1 à 6,
dans lequel une aire de surface spécifique mesurée au moyen d'une méthode BET sur trois points quant à l'adsorption d'azote est égale ou supérieure à 1 $m^2$/g et égale ou inférieure à 15 $m^2$/g.

**8.** Matériau d'électrode négative selon l'une quelconque des revendications 1 à 7,
dans lequel une quantité de gaz dioxyde de carbone absorbée est inférieure à 10 ml/g.

**9.** Matériau d'électrode négative selon l'une quelconque des revendications 1 à 8,
dans lequel un volume de pores ayant un diamètre des pores mesuré au moyen d'une méthode par intrusion au mercure va de 0,003 $\mu$m à 5 $\mu$m est inférieur à 0,55 ml/g.

**10.** Matériau d'électrode négative selon l'une quelconque des revendications 1 à 9,
dans lequel une densité ($\rho^B$) mesurée au moyen de butanol à titre de milieu de remplacement est égale ou supérieure à 1,50 $g/cm^3$ et égale ou inférieure à 1,80 $g/cm^3$.

**11.** Matériau d'électrode négative selon l'une quelconque des revendications 1 à 10,
dans lequel une densité ($\rho^H$) mesurée au moyen de gaz hélium à titre de milieu de remplacement est égale ou supérieure à 1,80 $g/cm^3$ et égale ou inférieure à 2,10 $g/cm^3$.

**12.** Matériau actif d'électrode négative comprenant le matériau d'électrode négative selon l'une quelconque des revendications 1 à 11.

**13.** Matériau actif d'électrode négative selon la revendication 12, comprenant en outre un type de matériau d'électrode négative différent du matériau d'électrode négative.

**14.** Matériau actif d'électrode négative selon la revendication 13, dans lequel le type différent de matériau d'électrode négative est un matériau de graphite.

15. Electrode négative comprenant le matériau actif d'électrode négative selon l'une quelconque des revendications 12 à 14.

16. Batterie ion-métal alcalin comprenant au moins l'électrode négative pour une batterie ion-métal alcalin selon la revendication 15, un électrolyte, et une électrode positive.

17. Batterie à ions de métal alcalin selon la revendication 16, dans laquelle la batterie à ions de métal alcalin est une batterie à lithium-ion ou une batterie sodium-ion.

[Fig.1]

101

103

(a)

101

103

103

(b)

101

103

(c)

<u>100</u>

[Fig.2]

12 ⎫
14 ⎬ 13
12 ⎭
16 ⎫ 18
16 ⎭
20 ⎫
22 ⎬ 21
20 ⎭

<u>10</u>

[Fig.3]

——— 10 μm

[Fig.4]

[Fig.5]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012188326 A
- JP 2012268643 A
- JP 2012268645 A
- JP 2013021643 A
- JP 8115723 A
- WO 2007040007 A

- JP 2012114024 A
- US 6482547 B1
- US 2009220863 A1
- JP 2000200603 A
- EP 0646978 A1
- JP 8279358 A